# EUROPÄISCHE PATENTSCHRIFT

(11) **EP 4 628 462 B1**
(45) Veröffentlichungstag und Bekanntmachung des Hinweises auf die Patenterteilung: **11.11.2026**
(21) Anmeldenummer: 25168415.5
(22) Anmeldetag: 04.04.2025
(51) Int. Cl.: C04B 5/06, C04B 7/14

(54) **VERFAHREN ZUR HERSTELLUNG EINES SCHLACKENGLASES SOWIE VORRICHTUNG ZUR DURCHFÜHRUNG DES VERFAHRENS**
METHOD FOR PRODUCING A SLAG GLASS AND DEVICE FOR CARRYING OUT THE METHOD
PROCÉDÉ DE FABRICATION D'UN VERRE À LAITIER ET DISPOSITIF POUR LA MISE EN OEUVRE DU PROCÉDÉ

(30) Priorität: 04.04.2024 AT 600642024; 12.07.2024 AT 505782024
(43) Veröffentlichungstag der Anmeldung: 08.10.2025
(73) Patentinhaber: Radmat AG, 5442 Fislisbach (CH)
(72) Erfinder: Edlinger, Alfred, 6781 Bartholomäberg (AT)
(74) Vertreter: SONN Patentanwälte GmbH & Co KG

(56) Entgegenhaltungen:
- WO-A1-2016/145466
- CA-A1- 2 979 558

## Beschreibung

Die vorliegende Erfindung betrifft ein Verfahren zur Herstellung eines Schlackenglases für die Herstellung einer hydraulisch aktiven Zementkomponente, wobei eine reduzierte Schlackenschmelze enthaltend Sulfid, insbesondere Calciumsulfid, einem Kühlschritt zum Verglasen der Schlackenschmelze unterworfen wird und der Kühlschritt darin besteht, die Schlackenschmelze in ein Wasserbad zu dosieren und darin zu dispergieren, sowie eine Vorrichtung zur Durchführung des Verfahrens.

Ein Verfahren der soeben genannten Art ist beispielsweise der Veröffentlichung WO 2023/180834 A1 zu entnehmen. Weiters offenbart die Veröffentlichung WO 2016/145466 A1 Verfahren und Vorrichtungen mit Bezug zum Gegenstand der vorliegenden Erfindung.

In Europa fallen große Mengen an kommunalen und industriellen Klärschlämmen an. Aufgrund des hohen Schadstoffpotentials ist deren Ausbringung in die Landwirtschaft trotz der potentiell guten Düngewirkung äußerst problematisch und teilweise verboten. Derartige Klärschlämme beinhalten nämlich anorganische Schadstoffe wie Zink, Cadmium, Quecksilber, Kupfer, Blei und dergleichen sowie organische Schadstoffe wie beispielsweise Hormone, Mikrokunststoffteile, Medikamentenreste und Spuren verschiedener Toxine. Wertvolle Hauptbestandteile hingegen sind Phosphate, Eisenverbindungen, sowie Verbindungen von Calcium, Silizium, Aluminium und Magnesium.

Die Entsorgung und Verwertung derartiger Klärschlämme nimmt mit einer mechanischen Entwässerung ihren Anfang, wodurch der Wassergehalt der Klärschlämme auf ca. 25 % Trockensubstanz reduziert wird. Bei der anschließenden thermischen Entwässerung wird der Anteil der Trockensubstanz auf über 90 % gesteigert. Thermisch getrocknete Klärschlämme zeichnen sich durch einen Heizwert (Hu) von etwa 11 MJ/Kg aus. In Europa werden diese Klärschlämme bevorzugt in einer Monoverbrennung (Wirbelschicht) verbrannt, um den wertvollen Phosphatanteil nutzbar machen zu können.

Die nach der Verbrennung zurückbleibende Asche stellt insbesondere aufgrund des Schwermetallgehalts einen unerwünschten Begleitstoff dar, sodass hier aufwändige Trennverfahren zur Gewinnung einer reinen Phosphorspezies notwendig sind. Der verbleibende Ascheanteil muss umweltgerecht entsorgt werden.

Hierzu wird die Klärschlammasche für gewöhnlich in einem schmelzthermischen Prozess oxidierend verschlackt, wobei sich die Schwermetallverbindungen und Alkalien weitgehend verflüchtigen und die organische Schadstofffracht komplett eliminiert wird. Zurück bleibt eine anorganische Schlackenschmelze, welche im Wesentlichen aus den Oxiden von Calcium, Magnesium, Silizium, Aluminium, Phosphor und Eisen besteht. Diese Schlackenschmelze kann in der Folge nach Stand der Technik carbothermisch (z.B. nach dem Wöhlerverfahren) aluthermisch oder elektrolytisch, beispielsweise entsprechend WO 2022/219466 A1 reduziert werden, wobei elementarer Phosphor (P₂) in die Gasphase übergeführt wird und eine zweiphasige Schmelze bestehend aus Eisenphosphid mit Schwermetallen und einer reduzierten Schlackenschmelze enthaltend Sulfid, insbesondere Calciumsulfid, entsteht.

Der dabei gewonnene elementare Phosphor stellt einen begehrten Rohstoff für die chemische und pharmazeutische Industrie sowie für die Nahrungsmittelindustrie dar und gewinnt für die geplante Energiewende hinsichtlich der Batterien für die E-Mobilität und auch für die Halbleitertechnik zunehmend an Bedeutung. In Europa befinden sich praktisch keine natürlichen Phosphatvorkommen (Apatit, Phosphorit), sodass es sich hier um einen besonders gefragten und kritischen chemischen Grundstoff handelt.

Allerdings besteht weiterhin der Bedarf, auch die reduzierte Schlackenschmelze optimiert zu nutzen, wobei es bereits bekannt ist, die entsprechenden Schlackenschmelzen durch rasches Abkühlen zu verglasen, um zementgängige und hierzu hydraulisch aktive Schlackengläser herzustellen, wobei der Verbesserung zementrelevanter Parameter wie Frühfestigkeit und Endfestigkeit stets Beachtung geschenkt wird.

Es ist somit Aufgabe der vorliegenden Erfindung, ein Verfahren zur Herstellung eines Schlackenglases zur Herstellung einer Zementkomponente anzugeben, mit dem Schlackengläser und durch Vermahlen der Schlackengläser letztlich hydraulisch aktive Zementkomponenten mit verbesserten zementrelevanten Eigenschaften erhalten werden können.

Zur Lösung dieser Aufgabe umfasst das erfindungsgemäße Verfahren zunächst zumindest die folgenden Schritte:
- Bereitstellen eines ersten Wasserbads in einem ersten Becken,
- Vorlegen von Schwefelsäure in dem ersten Wasserbad,
- Zugeben der Schlackenschmelze in das erste Wasserbad und Bereitstellen von Salpetersäure in dem ersten Wasserbad in einer Menge, die ausreichend ist, um Schwefelwasserstoff, der im ersten Wasserbad bei Umsetzung der mit der Schlackenschmelze dem ersten Wasserbad zugeführten Menge an Sulfid, insbesondere Calciumsulfid, zu Sulfat, insbesondere Calciumsulfat, gebildet wird, zu Schwefelsäure umzusetzen,
- Austragen von erstarrtem Schlackenglas und Calciumsulfat aus dem ersten Wasserbad.

Zum einen wird durch das Vorlegen von Schwefelsäure im ersten Wasserbad der pH-Wert des Wasserbads abgesenkt. Normalerweise ist der pH-Wert des Granulierwassers durch die mit der Schlackenschmelze eingetragenen Calciumspezies leicht basisch. Durch die Absenkung des pH-Werts wird erreicht, dass die verglasten Schlackenpartikel oberflächlich angeätzt und in der Folge durch die Salpetersäure oxidiert werden. Die Vorlage von Schwefelsäure führt jedoch auch zur Bildung von Sulfaten und insbesondere Calciumsulfat aus dem Sulfidanteil der Schlackenschmelze. Calciumsulfat, das heißt Gips, ist bereits als vorteilhaft im Sinne einer Verbesserung der Frühfestigkeit in Zementen bekannt. Bei der Durchführung des erfindungsgemäßen Verfahrens bildet sich Calciumsulfat jedoch bevorzugt auf der Oberfläche der verglasten Schlackengranalien, sodass beim Vermahlen der Granalien bei der Herstellung des hydraulischen Bindemittels das Schlackenglas und der Gips unmittelbar optimal vermischt erhalten werden, sodass eine optimale Frühfestigkeit des resultierenden Zements erzielt wird.

Die Schlackenzemente, die sich mit den erfindungsgemäß hergestellten Schlackengläsern herstellen lassen, zeichnen sich gegenüber herkömmlichen Portlandzementen durch signifikant verbesserte Endfestigkeiten und eine niedrige Hydratationswärmeentwicklung aus. Nachteilig sind bei diesen Zementen allerdings vergleichsweise geringe Frühfestigkeiten.

Zur Regeneration von Schwefelsäure, die bei der Gipsbildung verbraucht wird, wird erfindungsgemäß Salpetersäure zugegeben, sodass eine Ergänzung von Schwefelsäure in dem ersten Wasserbad für die weitere Verwertung von sulfidhältiger Schlackenschmelze grundsätzlich nicht notwendig ist. Der Verbrauch von Schwefelsäure zur Bildung von Calciumsulfat aus Calciumsulfid und die Regeneration der verbrauchten Schwefelsäure läuft beim erfindungsgemäßen Verfahren gemäß den folgen Reaktionen ab.

CaS + H₂SO₄ → CaSO₄ + H₂S

8 H₂S + 3 HNO₃ → 3 H₂SO₄ + 8 NO + 4 H₂O

Die bereitgestellte Salpetersäure generiert somit Schwefelsäure aus dem bei der Gipsbildung freigesetztem Schwefelwasserstoff, sodass die bloße Vorlage von Schwefelsäure ausreichend ist, um das erfindungsgemäße Verfahren durchzuführen und dabei die Bildung von Schwefelwasserstoff hintanzuhalten.

Die reduzierten Schlackenschmelzen, die mit der vorliegenden Erfindung verwertet werden sollen, enthalten hauptsächlich Kalziumoxid, Magnesiumoxid, Siliziumoxid, Aluminiumoxid, Schwefel, Kalium und Natrium, wobei Kalziumoxid und Siliziumoxid mit etwa 75 Gew.-% den Hauptanteil bilden. Die Analyse der im Rahmen der vorliegenden Erfindung verarbeiteten reduzierten Schlackenschmelzen liefert typischerweise die folgende chemische Zusammensetzung:

| | | |
|---|---|---|
| • | SiO₂ | 30-39 Gew.-% |
| • | Al₂O₃ | 9-18 Gew.-% |
| • | CaO | 33-48 Gew.-% |
| • | MgO | 2-13 Gew.-% |
| • | FeO | 0,1-1 Gew.-% |
| • | P₂O₅ | 0,05-1,3 Gew.-% |
| • | MnO | 0,2-3 Gew.-% |
| • | Na₂O | 0,2-1,2 Gew.-% |
| • | K₂O | 0,4-1,3 Gew.-% |
| • | SO₃ | 0-0,2 Gew.-% |
| • | S | 0,5-1,8 Gew.-% |

Um den Kühlschritt zur Granulierung der Schlackenschmelze zur Herstellung eines hochgradig amorphen hydraulischen Bindemittels möglichst rasch durchführen zu können, ist das Verfahren gemäß einer bevorzugten Ausführungsform der vorliegenden Erfindung dahingehend weitergebildet, dass die Basizität (CaO Gew-%/SiO₂ Gew.-%) der Schlackenschmelze vor dem Kühlschritt auf einen Wert von 0,85 bis 1,3, insbesondere auf einen Wert von 1,2 eingestellt wird. Die Einstellung der Basizität auf einen Wert in diesem Bereich sorgt dafür, dass die Schlackenschmelze eine niedrige Viskosität aufweist, sodass sie beim Kühlschritt eine möglichst große Oberfläche ausbildet und dadurch eine rasche Abkühlung stattfindet. Dies verhindert die Bildung von Schlackenkristallen, sodass im besten Fall ein vollständig amorphes Produkt als Schlackenglas erhalten wird.

Bevorzugt wird die Schwefelsäure in dem ersten Wasserbad mit einer Konzentration zwischen 0,05 mol/L und 0,15 mol/L, bevorzugt mit einer Konzentration zwischen 0,08 mol/L und 0,12 mol/L, und insbesondere bevorzugt mit einer Konzentration von 0,1 mol/L vorgelegt. Hierdurch wird zum einen ein ausreichend niedriger pH-Wert (in etwa pH = 1) für das beschriebene Anätzen der Schlackengranalien erzielt und gleichzeitig eine ausreichende Schwefelsäurekonzentration bereitgestellt, um die Sulfatisierung des Sulfids mit ausreichend hoher Geschwindigkeit zu verrichten.

Um ausreichende Mengen an Schwefelsäure für die weitere Zufuhr von sulfidhältiger Schlackenschmelze in der Vorlage im ersten Wasserbad sicherstellen zu können, ist das erfindungsgemäße Verfahren bevorzugt dahingehend weitergebildet, dass pro Kilogramm der mit der Schlackenschmelze dem ersten Wasserbad zugeführten Menge an Sulfid zwischen 4,2 kg und 6,2 kg Salpetersäure, bevorzugt zwischen 4,7 kg und 5,7 kg Salpetersäure und insbesondere bevorzugt 5,2 kg Salpetersäure bereitgestellt werden. Diese Mengen entsprechen im Wesentlichen dem stöchiometrischen Bedarf der oben dargestellten Reaktionen mit 5,25 Kilogramm Salpetersäure pro Kilogramm Sulfid (S²⁻) und die Zugabe von Salpetersäure kann je nach der erzielbaren Reaktionskinetik beziehungsweise in dem Ausmaß, in dem ein Abbau von Schwefelsäure in der Vorlage durch die Bildung von Gips tolerierbar ist, Salpetersäure etwas über oder etwas unter dem theoretischen stöchiometrischen Bedarf bereitgestellt werden. Diese Mengenangaben sind auf Sulfid bezogen und die Masse des Calciums oder gegebenenfalls des Magnesiums wurde hier nicht berücksichtigt. So würden die angegebenen Mengen Salpetersäure beispielsweise für etwa 2,3 kg Calciumsulfid oder für 1,75 kg Magnesiumsulfid gelten.

Die Salpetersäure kann im Rahmen der vorliegenden Erfindung auf verschiedene Weise bereitgestellt werden. Zum einen besteht selbstverständlich die Möglichkeit, die Salpetersäure zumindest teilweise durch Zugeben in das erste Wasserbad bereitzustellen, wie dies einer bevorzugten Ausführungsform der vorliegenden Erfindung entspricht. Die Salpetersäure kann auch vollständig durch Zugeben in das erste Wasserbad bereitgestellt werden.

Alternativ oder zusätzlich besteht jedoch die Möglichkeit, die Salpetersäure zumindest teilweise durch Oxidieren von salpetriger Säure in dem ersten Wasserbad, bevorzugt durch Einstellen der Sauerstoffaktivität in dem ersten Wasserbad, bereitzustellen. Salpetrige Säure bildet sich als Folge der oben dargestellten Reaktion zur Regeneration von Schwefelsäure nach der Bildung von Calciumsulfat aus Calciumsulfid

8 H₂S + 3 HNO₃ → 3 H₂SO₄ + 8 NO + 4 H₂O

aus Stickoxid nach der folgenden Reaktionsgleichung:

4 NO + O₂ + 2 H₂O → 4 HNO₂

Durch eine geeignet hohe Sauerstoffaktivität kann die salpetrige Säure (HNO₂) durch Oxidation zur Salpetersäure (HNO₃) aufoxidiert und damit dem ersten Wasserbad wiederum bereitgestellt werden, um die Regeneration von Schwefelsäure aus Schwefelwasserstoff zu bewerkstelligen.

Um eine ausreichende Versorgung des ersten Wasserbads mit den notwendigen Säuren sicherzustellen, kann das erfindungsgemäße Verfahren gemäß einer bevorzugten Ausführungsform dahingehend weitergebildet sein, dass während des Zugebens der Schlackenschmelze die Konzentration von Schwefelwasserstoff im ersten Wasserbad und/oder in einer Gasphase beziehungsweise Dampfphase über dem ersten Wasserbad gemessen wird und bei einer Zunahme der gemessenen Konzentration(en) von Schwefelwasserstoff dem ersten Wasserbad Salpetersäure und/oder Schwefelsäure zugegeben wird. Die Zunahme der Konzentration von Schwefelwasserstoff (H₂S) im ersten Wasserbad kann zum einen dadurch begründet sein, dass nicht genügend Salpetersäure bereitgestellt ist, um den Schwefelwasserstoff zu Schwefelsäure zu oxidieren. In diesem Fall ist eine gesteigerte Zugabe von Salpetersäure zum ersten Wasserbad notwendig. Zum anderen kann die Bildung von Schwefelwasserstoff aber auch darauf hindeuten, dass die Vorlage beziehungsweise die Regeneration von Schwefelsäure nicht ausreichend ist und dass sich daher aus Calciumsulfid oder einem anderen Sulfid, wie beispielsweise Magnesiumsulfid in Kontakt mit Wasser Schwefelwasserstoff bildet. In diesem Fall kann durch die Zugabe von zusätzlicher Schwefelsäure Abhilfe geschaffen werden, um die Bildung von Schwefelwasserstoff zu unterbinden und einen ausreichenden Säuregehalt für das gewünschte Anätzen der Oberfläche des gebildeten Schlackenglases sowie für die Bildung von Calciumsulfat aus Calciumsulfid oder von Magnesiumsulfat aus Magnesiumsulfid sicherzustellen.

Neben den eingangs bereits genannten Stoffen kann die reduzierte Schlackenschmelze weiters bedeutende Mengen an Silikaten enthalten, sodass es wünschenswert erscheint, diese für die Herstellung hydraulisch aktiver Zementkomponenten aus den Schlackenschmelzen nicht ungenutzt zu lassen. Das erfindungsgemäße Verfahren ist daher erfindungsgemäß zum einen dadurch gekennzeichnet, dass aus mit der Schlackenschmelze dem ersten Wasserbad zugeführtem Calciumsilikat (CaSiO₃) und salpetriger Säure im ersten Wasserbad gebildetes Calciumnitrit in ein zweites Wasserbad in einem zweiten Becken eingetragen und im zweiten Wasserbad zu Calciumnitrat oxidiert wird, bevorzugt durch Einstellen der Sauerstoffaktivität in dem zweiten Wasserbad, und Calciumnitrat und daran anhaftende kolloidale Mikrosilika aus dem zweiten Wasserbad gewonnen werden.

Calciumnitrat verbessert aufgrund seiner guten Porenwasser-Löslichkeit die Frühfestigkeitsentwicklung in Schlackenzementen.

Dies ist in der hohen Wasserlöslichkeit begründet. Das Calciumnitrat ist als chloridfreier Festigkeitsbeschleuniger besonders geeignet für stahlarmierte Betonkonstruktionen. Das Nitrat-Ion passiviert außerdem die Stahlarmierung im Sinne eines effektiven Korrosionsschutzes.

Der Grund für die Anwesenheit von salpetriger Säure im ersten Wasserbad wurde bereits oben mit der Hydratation von Stickoxid erklärt. Neben dem aus Calciumsilikat und salpetriger Säure gebildeten Calciumnitrit bildet sich nach der folgenden Reaktionsgleichung auch Mikrosilika (H₂SiO₃) aus dem Silikatanteil.

CaSiO₃ + 2 HNO₂ → Ca(NO₂)₂ + H₂SiO₃

Das Calciumnitrit kann, wie bereits beschrieben, im zweiten Wasserbad zu Calciumnitrat oxidiert werden

Ca(NO₂)₂ → Ca(NO₃)₂

und die Kieselsäure fällt in verschiedenen Modifikationen als Anhydrid an:

H₂SiO₃ → H₂O + SiO₂

Mikrosilika ist in der Zementtechnologie hochbegehrt und wird Mischzementen zur Verbesserung der Festigkeit zugesetzt. Wie schon zuvor für das gebildete Calciumsulfat und das Schlackenglas beschrieben, gilt auch für die gebildete Mikrosilika, dass diese in diesem Fall am Calciumnitrat und auch am Schlackenglas anhaftet. Die Mikrosilika bildet ein Kolloid um die Calciumnitratpartikel und haftet auch beim und nach dem Trocknen des Calciumnitrats weiterhin daran an. Beim Zermahlen des Calciumnitrats mit der daran anhaftenden Mikrosilika für die Herstellung von Zement ergibt sich wiederum eine innige Vermischung des Calciumnitrats mit der Mikrosilika bei geringer Mahlarbeit. Geringe Mengen an Essigsäure können sich durch Komplexbildung mit den Silikamodifikationen stabilisierend auswirken. Diese Modifikationen bleiben durch die Komplexbildung gleichsam eingefroren und da die Essigsäure durch den oxidierend wirkenden Salpetersäuranteil im Granulatwasser abgebaut wird, befindet sich in der sich gebildeten Zementstruktur kein zementschädlicher, festigkeitsretardierender Kohlenstoff mehr.

Die Bildung von Mikrosilika ist insbesondere hinsichtlich der oben erwähnten, geringen Frühfestigkeiten von Schlackenzementen wünschenswert und führt hier zu einer signifikanten Verbesserung der Zement- bzw. Betoneigenschaften. Neben der Bildung von Mikrosilika konnte auch die Bildung von Zeolith beobachtet werden, wobei dieses Schichtsilikat ebenfalls der Frühfestigkeitsentwicklung zuträglich ist.

Alternativ ist das erfindungsgemäße Verfahren zum anderen dadurch gekennzeichnet, dass aus Calciumsilikat und salpetriger Säure im ersten Wasserbad gebildetes Calciumnitrit in ein zweites Wasserbad in einem zweiten Becken eingetragen und im zweiten Wasserbad reduziert wird, bevorzugt durch Zugeben von Essigsäure in das zweite Wasserbad, und Calciumhydroxid und Mikrosilika aus dem zweiten Wasserbad gewonnen werden.

Gemäß einer weiteren bevorzugten Ausführungsform kann das erfindungsgemäße Verfahren auch dadurch gekennzeichnet sein, dass dem ersten Wasserbad zusätzliche Schwefelsäure in einer Menge zugegeben wird, die ausreichend ist, um mit der Schlackenschmelze dem ersten Wasserbad zugeführtes Calciumsilikat zu Calciumsulfat und Mikrosilika umzusetzen. In diesem Fall wird somit vermehrt Gips und Mikrosilika gebildet.

Dennoch kann das Verfahren gemäß der vorliegenden Erfindung dergestalt weitergebildet sein, dass pro Kilogramm der mit der Schlackenschmelze dem ersten Wasserbad zugeführten Menge an Calciumsilikat zwischen 745 g und 945 g Schwefelsäure, bevorzugt zwischen 795 g und 895 g Schwefelsäure und insbesondere bevorzugt 845 g Schwefelsäure zugeführt werden, wie dies einer bevorzugten Ausführungsform entspricht. Dies stellt für den Fall von etwa 845 g Schwefelsäure die stöchiometrische Menge dar, um ein Kilogramm Calciumsilikat zu Calciumsulfat und Mikrosilika umzusetzen. Es ist hier zu beachten, dass sich diese Mengen ausdrücklich auf Calciumsilikat beziehen.

Bevorzugt wird das erste Wasserbad zur Ausbildung einer Trombe in Rotation versetzt. Die auf das rotierende Wasserbad auftreffende Schlackenschmelze wird hierdurch aufgrund hoher Scherkräfte sofort zerteilt und dadurch im ersten Wasserbad dispergiert. Auf diese Weise tritt eine überaus rasche Abkühlung der Schlackenschmelze ein, sodass eine möglichst vollständige Verglasung der reduzierten Schlackenschmelze zu amorphem Schlackenglas weitgehend ohne kristalline Einschlüsse erreicht werden kann.

Wie bereits mehrfach erwähnt, ist die möglichst vollständige Verglasung der als Ausgangsstoff des erfindungsgemäßen Verfahrens zur Herstellung eines hydraulischen Bindemittels eingesetzten Schlackenschmelze anzustreben. Zu diesem Zweck ist das Verfahren gemäß der vorliegenden Erfindung bevorzugt dahingehend weitergebildet, dass das erste Wasserbad mit einer Temperatur zwischen 80°C und dem Siedepunkt, bevorzugt zwischen 85°C und dem Siedepunkt, weitere bevorzugt zwischen 90°C und dem Siedepunkt und insbesondere bevorzugt zwischen 95°C und dem Siedepunkt bereitgestellt wird. Die Schlackenschmelze wird gemäß dieser bevorzugten Verfahrensführung in ein Wasserbad mit einer Temperatur nahe am Siedepunkt des Wassers eingebracht und im Wasserbad möglichst kleinteilig dispergiert, um einen raschen Übergang der Wärme von der Schlackenschmelze in das Wasserbad zu gewährleisten. Hierbei ist die Einstellung der Basizität der Schlackenschmelze und die damit einhergehende Reduktion der Viskosität von Nutzen, da eine Schlackenschmelze mit Basizitätswerten zwischen 0,85 und 1,3 beispielsweise durch Rühren im Wasserbad durch die beim Rühren auftretenden Scherkräfte dispergiert, **d.h.** zerteilt und zerkleinert wird. Für eine besonders rasche Abkühlung wird das Wasserbad bevorzugt bei erhöhten Temperaturen von über 80°C und dem Siedepunkt bereitgestellt. Hierdurch kommt es beim Einbringen der Schlackenschmelze zu einem sofortigen Verdampfen des Wassers im Wasserbad, sodass für das Kühlen der Schlackenschmelze sofort die Verdampfungsenthalpie des Wassers zur Verfügung steht, was bekanntermaßen zur Aufnahme besonders großer Wärmemengen durch das Wasser und folglich zu einer raschen Kühlung und damit verbesserten Verglasung führt.

Bei dem erfindungsgemäßen Verfahren und insbesondere bei einer Verfahrensführung, bei der der Kühlschritt in einem Wasserbad mir erhöhter Temperatur zwischen 80°C und dem Siedepunkt durchgeführt wird, fällt ein mikroporöses und in Form von Hohlkugeln granuliertes, Schlackenglas an, welches sich aufgrund dieser Eigenschaft besonders leicht mahlen lässt. Das Vermahlen des granulierten Schlackenglases, das beim erfindungsgemäßen Verfahren gebildet wird, erfordert daher nur eine sehr geringe Mahlarbeit und es kommt auch zu keinerlei Verklebungen an den Mahlwerkzeugen. Es gelingt daher mit geringem Aufwand, sehr geringe Korngrößen aus dem granulierten Schlackenglas zu erhalten, und bevorzugt Korngrößen von kleiner als 80 Mikrometer Durchmesser. Das so fein vermahlene Produkt ist sehr leicht zementgängig und hoch reaktiv, sodass die Hydraulizität des resultierenden hydraulischen Bindemittels noch weiter gesteigert werden kann. Hiermit geht eine besonders vorteilhafte Zementfrühfestigkeit einher.

Selbstverständlich verdampfen beim Kühlschritt in dem Wasserbad große Mengen Wasser, und es bilden sich dementsprechend große Mengen an Brüden (etwa 750 kg Dampf pro 1000 kg Schlackenschmelze), weshalb das erfindungsgemäße Verfahren in diesem Zusammenhang bevorzugt dahingehend weitergebildet ist, dass beim Kühlschritt entstehende Brüden aus dem Wasserbad aufgefangen, kondensiert und dem Wasserbad wieder zugeführt werden, wobei die Kondensation bevorzugt in Form einer adiabaten Kompression durchgeführt wird zur Gewinnung von exergetisch nutzbarer Abwärme aus dem Brüden. Es kann hierbei ein geschlossener Dampfkreislauf gebildet werden, sodass bei Durchführung des erfindungsgemäßen Verfahrens keinerlei problematische Dämpfe austreten. Gemäß einer bevorzugten Ausführungsform erfolgt die Kondensation in Form einer adiabaten Kompression zur Gewinnung von Abwärme aus dem Brüden. Die adiabate Kompression von Brüden zur Gewinnung von Abwärme ist im Stand der Technik als Thermokompression bekannt und führt dazu, dass die Kondensationswärme der Brüden auf einem höheren Temperaturniveau anfällt, wodurch gegenüber einer isobaren Kondensation durch Abkühlung auch ein großer Teil der Abwärme der Brüden als fühlbare Wärme durch Wärmetausch auf erhöhtem Temperaturniveau gewonnen werden kann.

Die erfindungsgemäße Vorrichtung zur Durchführung des Verfahrens umfasst eine Granulierkammer mit einem ersten Becken zur Aufnahme eines ersten Wasserbades, eine Aufgabevorrichtung für die reduzierte Schlackenschmelze in Form eines in das erste Becken reichenden Tauchrohrs sowie einen zur Rotation antreibbaren Rotor im ersten Becken unterhalb des Tauchrohrs, um das erste Wasserbad zur Ausbildung einer Trombe in Rotation zu versetzen, wobei die Aufgabevorrichtung einen Schmelzebehälter für die Schlackenschmelze umfasst, der in seinem Boden eine konzentrisch zum Tauchrohr angeordnete Öffnung aufweist, die mit einem in zum Tauchrohr axialer Richtung verschiebbaren Stößel verschließbar ist, wobei die Vorrichtung erfindungsgemäß dadurch gekennzeichnet ist, dass eine Zuleitung für Schwefelsäure und/oder Salpetersäure, bevorzugt in einem Bodenbereich unterhalb des Rotors, in das erste Becken mündet.

Mit der erfindungsgemäßen Vorrichtung ist es möglich, die Schlackenschmelze durch den Ringspalt, der zwischen der konzentrisch im Boden des Schmelzebehälters für die Schlackenschmelze angeordneten Öffnung und dem in axialer Richtung verschiebbaren Stößel ausgebildet wird, als möglichst dünnwandigen Schmelzemantel aus dem Schmelzebehälter in das Tauchrohr eintreten zu lassen. Hierdurch trifft die Schlackenschmelze bereits als dünne Schicht auf das Wasserbad auf, welches durch die Wirkung des zur Rotation antreibbaren Rotors im Becken unterhalb des Tauchrohrs einen Wirbel und somit eine Trombe ausbildet, sodass die auf das rotierende Wasserbad auftreffende Schlackenschmelze sofort hohen Scherkräften ausgesetzt und dadurch im Wasserbad dispergiert wird. Auf diese Weise tritt eine überaus rasche Abkühlung der Schlackenschmelze ein, sodass eine vollständige Verglasung zu amorphem Schlackenglas erreicht werden kann.

Für die Zugabe eines Oxidationsmittels ist die erfindungsgemäße Vorrichtung bevorzugt dahingehend weitergebildet, dass eine Zuleitung für ein gasförmiges Oxidationsmittel axial durch den Stößel geführt ist. Auf diese Weise wird das Oxidationsmittel bereits im Tauchrohr in die dünne Schicht der Schlackenschmelze eingebracht und tritt zusammen mit der Schlackenschmelze in das Wasserbad ein und wird dort ebenfalls dispergiert, sodass es zu einer effektiven Oxidation von salpetriger Säure zu Salpetersäure kommen kann, sofern dies benötigt wird.

Wie oben beschrieben, ist es erfindungsgemäß vorgesehen, im ersten Wasserbad gebildetes Calciumnitrit unter gleichzeitiger Bildung von Mikrosilika zu Calciumnitrat zu oxidieren oder zu Calciumhydroxid zu reduzieren. Zu diesem Zweck ist die erfindungsgemäße Vorrichtung dadurch gekennzeichnet, dass an einen Randbereich des ersten Beckens ein zweites Becken anschließt, wobei bevorzugt eine Zuleitung für ein gasförmiges Oxidationsmittel, bevorzugt für ein sauerstoffhältiges Gas, und/oder eine Zuleitung für Essigsäure in das zweite Becken mündet. Durch die Zuleitung beziehungsweise durch die Zuleitungen können im zweiten Wasserbad die gewünschten Redoxbedingungen unabhängig von den Redoxbedingungen im ersten Wasserbad hergestellt werden, um das Nitrit entweder zu oxidieren oder zu reduzieren. Der Rotor kann in Bezug auf seine Drehzahl so eingestellt werden, dass die Trombe bis knapp an die Oberkante eines Wehrs zwischen dem ersten und dem zweiten Becken heranreicht, sodass aufschwimmendes Schlackenglas über das Wehr und in das an das Wehr anschließende zweite Becken gefördert wird und die gewünschte Oxidation oder Reduktion von Nitriten im zweiten Wasserbad ausgeführt werden kann.

Um die Verweilzeit von Calciumnitrit zur Durchführung der Oxidation oder der Reduktion in der erfindungsgemäßen Vorrichtung im zweiten Becken steuern zu können, kann die erfindungsgemäße Vorrichtung gemäß einer bevorzugten Ausführungsform dadurch gekennzeichnet sein, dass das zweite Becken zur Ausbildung eines Ringraums von einem Leitkörper durchsetzt ist, wobei bevorzugt eine Lanze zur Einbringung von Treibdampf in den Ringraum mündet. Die Ausbildung eines Ringraums im zweiten Becken dient dazu, die Reaktanten im zweiten Becken im Kreis führen zu können, bis die Umsetzung zu Nitrat oder Hydroxid stattgefunden hat. Hierbei kann ein Treibstrahl aus Heißdampf eingesetzt werden, um das zweite Wasserbad in Rotation um den Leitkörper zu versetzen und zu halten.

Schließlich weist die Granulierkammer einen Austragsbereich für granuliertes Schlackenglas auf, der mit einem Sperrelement vom zweiten Becken abtrennbar ist, wobei bevorzugt im Austragsbereich eine Siebfläche, ein Hydrozyklon oder eine Schubzentrifuge zum Abziehen von Brüden in einen Brüdenabzug angeordnet ist. Im Austragsbereich können auch die weiteren Verfahrensprodukte wie Calciumnitrat oder Calciumhydroxid sowie Mikrosilika und auch Schlackenglas ausgetragen und getrocknet werden.

Die vorliegende Erfindung wird nachfolgend anhand eines in der Zeichnung dargestellten Ausführungsbeispiels näher erläutert.

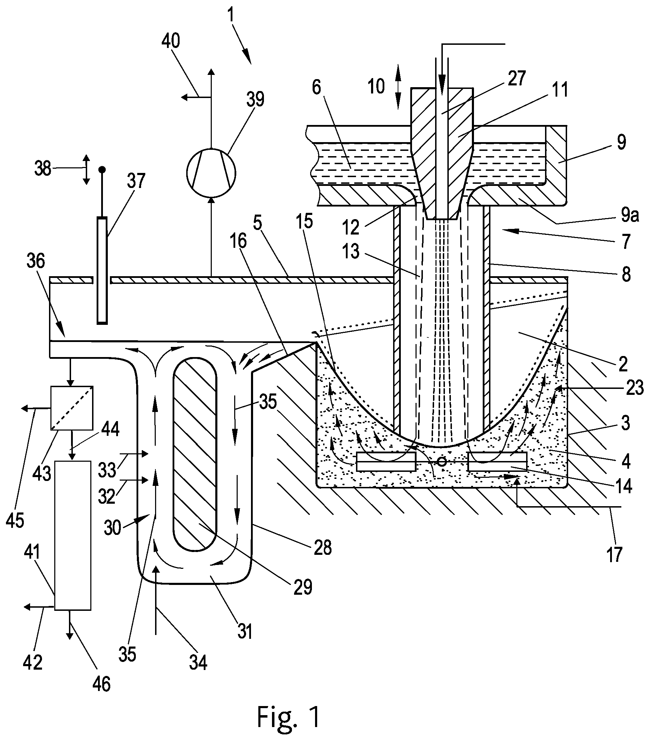

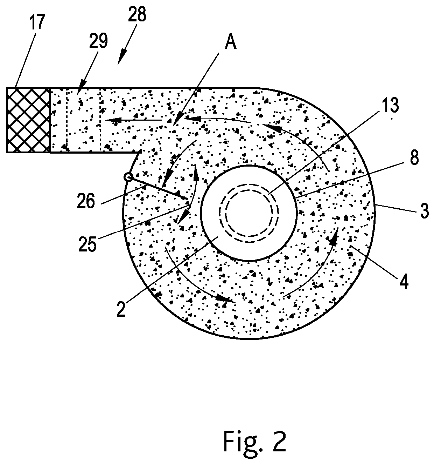

In dieser zeigen Fig. 1 eine seitliche Schnittdarstellung der erfindungsgemäßen Vorrichtung und Fig. 2 einen Höhenschnitt quer zur axialen Richtung in Höhe des Wehrs einer abgewandelten Ausführungsform einer erfindungsgemäßen Vorrichtung.

In Fig. 1 ist die erfindungsgemäße Vorrichtung zur Durchführung des erfindungsgemäßen Verfahrens mit dem Bezugszeichen 1 bezeichnet. Die Vorrichtung 1 weist eine Granulierkammer 2 auf, die ein erstes Becken 3 zur Aufnahme eines ersten Wasserbads 4 ausbildet. Im ersten Wasserbad 4 ist Schwefelsäure vorgelegt. Die Granulierkammer 2 ist an einem oberen Ende mit einem Deckel 5 verschlossen, damit bei der Granulation der reduzierten Schlackenschmelze gebildete Brüden nicht unkontrolliert austreten können. Eine Aufgabevorrichtung für die Schlackenschmelze 6 ist mit dem Bezugszeichen 7 bezeichnet. Die Aufgabevorrichtung 7 besteht im Wesentlichen aus einem in das erste Becken 3 reichenden Tauchrohr 8, einem Schmelzebehälter 9 für die reduzierte Schlackenschmelze 6 und einen in axialer Richtung 10 verschiebbaren Stößel 11, der eine im Boden 9a des Schmelzebehälters 9 angeordnete Öffnung 12 verschließen oder freigeben kann. Eine Zuleitung 27 für ein gasförmiges Oxidationsmittel, insbesondere ein sauerstoffhältiges Gas, ist axial durch den Stößel 11 geführt. Bei Freigabe der Öffnung 12 durch den Stößel 11 tritt ein hohlzylindrischer Film 13 der Schlackenschmelze 6 in das Tauchrohr 8 ein und trifft in der Folge auf die Oberfläche einer im ersten Wasserbad 4 durch die Wirkung des Rotors 14 gebildeten Trombe 15 und wird dort sofort zerteilt und dispergiert. Mit dem Bezugszeichen 17 ist eine Zuleitung für Schwefelsäure und/oder Salpetersäure im Bodenbereich unterhalb des Rotors 14 in das erste Becken 3 mündend bezeichnet. Im ersten Wasserbad 4 findet auf diese Weise eine überaus rasche Abkühlung der Schlackenschmelze 6 zu amorphem Schlackenglas statt und das erstarrte Schlackenglas schwimmt an der Oberfläche der Trombe 15 auf. Gleichzeitig finden im ersten Wasserbad 4 die oben erörterten chemischen Reaktionen statt. Bei entsprechender Einstellung der Drehzahl des Rotors 14 erreicht das gebildete Schlackenglas die Höhe des Wehrs 16 und wird über das Wehr 16 in das zweite Becken 28 eingetragen. Über eine Leitung 23 kann dem ersten Wasserbad 4 zusätzlich Wasser zum Ausgleich von Verlusten im ersten Wasserbad 4 zugeführt werden.

Das zweite Becken 28 wird von einem Leitkörper 29 durchsetzt, wodurch im zweiten Becken 28 ein Ringraum 30 gebildet wird, in dem sich ein zweites Wasserbad 31 befindet. Zuleitungen für ein gasförmiges Oxidationsmittel beziehungsweise für ein Reduktionsmittel sind mit den Bezugszeichen 32 beziehungsweise 33 bezeichnet. Eine Zuleitung zur Einbringung von Treibdampf in den Ringraum 30 beziehungsweise in das zweite Wasserbad 31 ist mit 34 bezeichnet und dient dazu, das zweite Wasserbad 30 im Sinne der Pfeile 35 in Rotation um den Leitkörper 29 zu versetzen. Die Rotation um den Leitkörper 29 wird hierbei nicht nur durch die kinetische Energie des Treibdampfs angetrieben, sondern auch von dem durch die Dampfblasen bedingten Dichteunterschied zwischen dem absteigenden und dem ansteigenden Teil. Wenn durch die Wirkung des durch die Zuleitung 32 eingebrachten Oxidationsmittels eine ausreichende Umsetzung von Nitrit zu Nitrat beziehungsweise durch die Wirkung von durch die Zuleitung 33 eingebrachter Essigsäure eine ausreichende Umsetzung von Nitrit zu Hydroxid und jeweils Mikrosilika stattgefunden hat, kann das granulierte Schlackenglas in einen Austragsbereich 36 gefördert werden, der durch ein im Sinne des Doppelpfeils 38 bewegbares Sperrelement 37 vom zweiten Becken abtrennbar ist. Das Sperrelement 37 gestattet somit die Einstellung der durchschnittlichen Verweilzeit der Reaktanden im zweiten Wasserbad. Die Brüden werden abgezogen und über einen Brüdenverdichter 39 einer energetischen Verwertung im Sinne einer Thermokompression zugeführt. Bei einer Thermokompression entsteht weiters hochwertige Abwärme in Mengen von ungefähr 460 kWh/t Ausgangsschlackenschmelze, wobei die Abwärme bei etwa 180°C anfällt. Nach dem Brüdenverdichter 39 kann an der Position 40 nicht benötigter, überschüssiger Dampf abgezogen und einer energetischen Verwertung zugeführt werden. Der Dampf kann hierbei auch der Leitung 23 zur Ergänzung des ersten Wasserbads zugeführt werden. Das Schlackenglas gelangt vom Austragsbereich 36 in einen Separator 43. Dort erfolgt eine Abtrennung von Restfeuchte an der Position 45 und das Schlackenglas, das Calciumnitrat, Mikrosilika und gegebenenfalls Zeolith werden über 44 einem Kühler 41 zugeführt, wo die verbleibende Abwärme an der Position 42 abgezogen und das granulierte Produkt über 46 gewonnen werden kann. Im Kühler 41 kann eine Trocknung des Schlackenglases, der Mikrosilika, des Calciumnitrats und des Zeoliths bei vermindertem Druck erfolgen.

In Fig. 2 sind gleiche Teile mit gleichen Bezugszeichen versehen, und es ist zu erkennen, dass die Granulierkammer 2 im Wesentlichen einen rotationssymmetrischen Querschnitt aufweist, der für die Ausbildung einer Trombe 15 durch die Wirkung des Rotors 14 geeignet ist. Das amorphe Schlackenglas tritt in den Bereich des Wehrs 16, der tangential aus dem Wasserbecken ausleitet, wobei das in Fig. 1 im Schnitt dargestellte Wehr 16 in jenem Bereich angeordnet ist, der in Figur 2 mit dem Bezugszeichen A gekennzeichnet ist. Im Bereich des ersten Beckens 3 kann in Rotationsrichtung der Trombe 15, die durch die kreisförmig eingezeichneten Pfeile in Figur 2 angedeutet ist, hinter der Ausleitung in das zweite Becken 28 ein im Sinne des Doppelpfeils 25 verstellbares Leitelement 26 angeordnet sein, mit dem das auf der Trombe aufschwimmende Schlackenglas zusätzlich zum Wehr 16 hin aufgestaut werden kann. Das Leitelement 26 kann hierzu auch in Form eines Rechens ausgebildet sein, um die Ausbildung der Trombe 15 nicht übermäßig zu behindern. Anstelle des Austragsbereichs der Figur 1 ist bei der Ausführungsform der Figur 2 lediglich eine Entwässerungsvorrichtung in Form einer Siebfläche 17 vorgesehen. Die Entwässerungsvorrichtung kann auch als Hydxrozyklon oder als Schubzentrifuge ausgebildet sein. Mit 29 ist wiederum der Leitkörper bezeichnet.

## Patentansprüche

1. Verfahren zur Herstellung eines Schlackenglases für die Herstellung einer hydraulisch aktiven Zementkomponente, wobei eine reduzierte Schlackenschmelze (6) enthaltend Sulfid, insbesondere Calciumsulfid, einem Kühlschritt zum Verglasen der Schlackenschmelze unterworfen wird und der Kühlschritt darin besteht, die Schlackenschmelze (6) in ein Wasserbad zu dosieren und darin zu dispergieren, wobei das Verfahren zumindest die folgenden Schritte umfasst:
- Bereitstellen eines ersten Wasserbads (4) in einem ersten Becken (3),
- Vorlegen von Schwefelsäure in dem ersten Wasserbad (4),
- Zugeben der Schlackenschmelze (6) in das erste Wasserbad (4) und Bereitstellen von Salpetersäure in dem ersten Wasserbad (4) in einer Menge, die ausreichend ist, um Schwefelwasserstoff, der im ersten Wasserbad (4) bei Umsetzung der mit der Schlackenschmelze (6) dem ersten Wasserbad (4) zugeführten Menge an Sulfid, insbesondere Calciumsulfid, zu Sulfat, insbesondere Calciumsulfat, gebildet wird, zu Schwefelsäure umzusetzen,
- Austragen von erstarrtem Schlackenglas und Calciumsulfat aus dem ersten Wasserbad (4)., **dadurch gekennzeichnet,**
- **dass** aus mit der Schlackenschmelze (6) dem ersten Wasserbad (4) zugeführtem Calciumsilikat und salpetriger Säure im ersten Wasserbad (4) gebildetes Calciumnitrit in ein zweites Wasserbad (31) in einem zweiten Becken (28) eingetragen und im zweiten Wasserbad (31) zu Calciumnitrat oxidiert wird, bevorzugt durch Einstellen der Sauerstoffaktivität in dem zweiten Wasserbad (31), und Calciumnitrat und daran anhaftende kolloidale Mikrosilika aus dem zweiten Wasserbad (31) gewonnen werden, oder
- **dass** aus mit der Schlackenschmelze (6) dem ersten Wasserbad (4) zugeführtem Calciumsilikat und salpetriger Säure im ersten Wasserbad (4) gebildetes Calciumnitrit in ein zweites Wasserbad (31) in einem zweiten Becken eingetragen (28) und im zweiten Wasserbad (31) reduziert wird, bevorzugt durch Zugeben von Essigsäure in das zweite Wasserbad (31), und Calciumhydroxid und Mikrosilika aus dem zweiten Wasserbad (31) gewonnen werden.

2. Verfahren nach Anspruch 1, **dadurch gekennzeichnet, dass** die Schwefelsäure in dem ersten Wasserbad (4) mit einer Konzentration zwischen 0,05 mol/L und 0,15 mol/L, bevorzugt mit einer Konzentration zwischen 0,08 mol/L und 0,12 mol/L, und insbesondere bevorzugt mit einer Konzentration von 0,1 mol/L vorgelegt wird.

3. Verfahren nach Anspruch 1 oder 2, **dadurch gekennzeichnet, dass** pro Kilogramm der mit der Schlackenschmelze (6) dem ersten Wasserbad (4) zugeführten Menge an Sulfid zwischen 4,2 kg und 6,2 kg Salpetersäure, bevorzugt zwischen 4,7 kg und 5,7 kg Salpetersäure und insbesondere bevorzugt 5,2 kg Salpetersäure bereitgestellt werden.

4. Verfahren nach Anspruch 1, 2 oder 3, **dadurch gekennzeichnet, dass** die Salpetersäure zumindest teilweise durch Zugeben in das erste Wasserbad bereitgestellt wird.

5. Verfahren nach einem der Ansprüche 1 bis 4, **dadurch gekennzeichnet, dass** die Salpetersäure zumindest teilweise durch Oxidieren von salpetriger Säure in dem ersten Wasserbad (4), bevorzugt durch Einstellen der Sauerstoffaktivität in dem ersten Wasserbad (4), bereitgestellt wird.

6. Verfahren nach einem der Ansprüche 1 bis 5, **dadurch gekennzeichnet, dass** während des Zugebens der Schlackenschmelze (6) die Konzentration von Schwefelwasserstoff im ersten Wasserbad (4) und/oder in einer Gasphase beziehungsweise Dampfphase über dem ersten Wasserbad (4) gemessen wird und bei einer Zunahme der gemessenen Konzentration(en) von Schwefelwasserstoff dem ersten Wasserbad (4) Salpetersäure und/oder Schwefelsäure zugegeben wird.

7. Verfahren nach einem der Ansprüche 1 bis 6, **dadurch gekennzeichnet, dass** dem ersten Wasserbad (4) zusätzliche Schwefelsäure in einer Menge zugegeben wird, die ausreichend ist, um mit der Schlackenschmelze (6) dem ersten Wasserbad (4) zugeführtes Calciumsilikat zu Calciumsulfat und Mikrosilika umzusetzen.

8. Verfahren nach einem der Ansprüche 1 bis 7, **dadurch gekennzeichnet, dass** pro Kilogramm der mit der Schlackenschmelze (65) dem ersten Wasserbad (4) zugeführten Menge an Calciumsilikat zwischen 745 g und 945 g Schwefelsäure, bevorzugt zwischen 795 g und 895 g Schwefelsäure und insbesondere bevorzugt 845 g Schwefelsäure zugeführt werden.

9. Verfahren nach einem der Ansprüche 1 bis 8, **dadurch gekennzeichnet, dass** das erste Wasserbad (4) zur Ausbildung einer Trombe (15) in Rotation versetzt wird.

10. Verfahren nach einem der Ansprüche 1 bis 9, **dadurch gekennzeichnet, dass** das erste Wasserbad (4) mit einer Temperatur zwischen 80°C und dem Siedepunkt, bevorzugt zwischen 85°C und dem Siedepunkt, weiters bevorzugt zwischen 90°C und dem Siedepunkt und insbesondere bevorzugt zwischen 95°C und dem Siedepunkt bereitgestellt wird.

11. Verfahren nach einem der Ansprüche 1 bis 10, **dadurch gekennzeichnet, dass** beim Kühlschritt entstehende Brüden aus dem ersten Wasserbad (4) aufgefangen, kondensiert und dem ersten Wasserbad (4) wieder zugeführt werden, wobei die Kondensation bevorzugt in Form einer adiabaten Kompression durchgeführt wird zur Gewinnung von exergetisch nutzbarer Abwärme aus den Brüden.

12. Vorrichtung zur Durchführung des Verfahrens nach einem der Ansprüche 1 bis 11, umfassend eine Granulierkammer (2) mit einem ersten Becken (3) zur Aufnahme eines ersten Wasserbades (4), eine Aufgabevorrichtung (7) für die reduzierte Schlackenschmelze (6) in Form eines in das erste Becken (3) reichenden Tauchrohrs (8) sowie einen zur Rotation antreibbaren Rotor (14) im ersten Becken (3) unterhalb des Tauchrohrs (8), um das erste Wasserbad (4) zur Ausbildung einer Trombe (15) in Rotation zu versetzen, wobei die Aufgabevorrichtung (7) einen Schmelzebehälter (9) für die Schlackenschmelze (6) umfasst, der in seinem Boden (9a) eine konzentrisch zum Tauchrohr (8) angeordnete Öffnung (12) aufweist, die mit einem in zum Tauchrohr (8) axialer Richtung (10) verschiebbaren Stößel (11) verschließbar ist, wobei eine Zuleitung (17) für Schwefelsäure und/oder Salpetersäure, bevorzugt in einem Bodenbereich unterhalb des Rotors (14), in das erste Becken (3) mündet, **dadurch gekennzeichnet, dass** an einen Randbereich des ersten Beckens (3) ein zweites Becken (28) zur Aufnahme eines zweiten Wasserbads (31) anschließt, wobei bevorzugt eine Zuleitung (32) für ein gasförmiges Oxidationsmittel, bevorzugt für ein sauerstoffhältiges Gas, und/oder eine Zuleitung (33) für Essigsäure in das zweite Becken (28) mündet.

13. Vorrichtung nach Anspruch 12, **dadurch gekennzeichnet, dass** eine Zuleitung (27) für ein gasförmiges Oxidationsmittel, insbesondere für ein sauerstoffhaltiges Gas, axial durch den Stößel (11) geführt ist.

14. Vorrichtung nach Anspruch 13, **dadurch gekennzeichnet, dass** das zweite Becken (28) zur Ausbildung eines Ringraums (30) von einem Leitkörper (29) durchsetzt ist, wobei bevorzugt eine Zuleitung (34) zur Einbringung von Treibdampf in den Ringraum (30) mündet.

15. Vorrichtung nach einem der Ansprüche 12 bis 14, **dadurch gekennzeichnet, dass** die Granulierkammer (2) einen Austragsbereich (36) für granuliertes Schlackenglas aufweist, der mit einem Sperrelement (37) vom zweiten Becken (28) abtrennbar ist, wobei bevorzugt im Austragsbereich (36) eine Siebfläche (17), ein Hydrozyklon oder eine Schubzentrifuge zum Abziehen von Brüden in einen Brüdenabzug angeordnet ist.

## Claims

1. Method for producing a slag glass for the production of a hydraulically active cement component, wherein a reduced slag melt (6) containing sulfide, in particular calcium sulfide, is subjected to a cooling step for vitrifying the slag melt, and the cooling step consists of metering the slag melt (6) into a water bath and dispersing it therein, wherein the method comprises at least the following steps:
- providing a first water bath (4) in a first basin (3),
- initially charging sulfuric acid in the first water bath (4),
- adding the slag melt (6) into the first water bath (4) and providing nitric acid in the first water bath (4) in an amount sufficient to convert hydrogen sulfide, which is formed in the first water bath (4) upon conversion of the amount of sulfide, in particular calcium sulfide, fed to the first water bath (4) with the slag melt (6) into sulfate, in particular calcium sulfate, to sulfuric acid,
- discharging solidified slag glass and calcium sulfate from the first water bath (4), **characterized in**
- **that** calcium nitrite formed in the first water bath (4) from calcium silicate fed to the first water bath (4) with the slag melt (6) and nitrous acid is introduced into a second water bath (31) in a second basin (28) and is oxidized to calcium nitrate in the second water bath (31), preferably by adjusting the oxygen activity in the second water bath (31), and calcium nitrate and colloidal microsilica adhering thereto are recovered from the second water bath (31), or
- **that** calcium nitrite formed in the first water bath (4) from calcium silicate fed to the first water bath (4) with the slag melt (6) and nitrous acid is introduced into a second water bath (31) in a second basin (28) and is reduced in the second water bath (31), preferably by adding acetic acid into the second water bath (31), and calcium hydroxide and microsilica are recovered from the second water bath (31).

2. Method according to claim 1, **characterized in that** the sulfuric acid is initially charged in the first water bath (4) with a concentration between 0.05 mol/L and 0.15 mol/L, preferably with a concentration between 0.08 mol/L and 0.12 mol/L, and particularly preferably with a concentration of 0.1 mol/L.

3. Method according to claim 1 or 2, **characterized in that** between 4.2 kg and 6.2 kg of nitric acid, preferably between 4.7 kg and 5.7 kg of nitric acid, and particularly preferably 5.2 kg of nitric acid are provided per kilogram of the amount of sulfide fed to the first water bath (4) with the slag melt (6).

4. Method according to claim 1, 2, or 3, **characterized in that** the nitric acid is provided at least partially by adding it into the first water bath.

5. Method according to any one of claims 1 to 4, **characterized in that** the nitric acid is provided at least partially by oxidizing nitrous acid in the first water bath (4), preferably by adjusting the oxygen activity in the first water bath (4).

6. Method according to any one of claims 1 to 5, **characterized in that** during the addition of the slag melt (6) the concentration of hydrogen sulfide in the first water bath (4) and/or in a gas phase or vapor phase above the first water bath (4) is measured, and, in the event of an increase in the measured concentration(s) of hydrogen sulfide, nitric acid and/or sulfuric acid is added to the first water bath (4).

7. Method according to any one of claims 1 to 6, **characterized in that** additional sulfuric acid is added to the first water bath (4) in an amount sufficient to convert calcium silicate fed to the first water bath (4) with the slag melt (6) to calcium sulfate and microsilica.

8. Method according to any one of claims 1 to 7, **characterized in that** between 745 g and 945 g of sulfuric acid, preferably between 795 g and 895 g of sulfuric acid, and particularly preferably 845 g of sulfuric acid are fed per kilogram of the amount of calcium silicate fed to the first water bath (4) with the slag melt (65).

9. Method according to any one of claims 1 to 8, **characterized in that** the first water bath (4) is set in rotation to form a vortex (15).

10. Method according to any one of claims 1 to 9, **characterized in that** the first water bath (4) is provided at a temperature between 80 °C and the boiling point, preferably between 85 °C and the boiling point, further preferably between 90 °C and the boiling point, and particularly preferably between 95 °C and the boiling point.

11. Method according to any one of claims 1 to 10, **characterized in that** vapors generated during the cooling step are collected from the first water bath (4), condensed, and fed back to the first water bath (4), wherein the condensation is preferably carried out in the form of an adiabatic compression to recover exergetically usable waste heat from the vapors.

12. Apparatus for carrying out the method according to any one of claims 1 to 11, comprising a granulation chamber (2) having a first basin (3) for receiving a first water bath (4), a feeding device (7) for the reduced slag melt (6) in the form of a dip tube (8) extending into the first basin (3), and a rotor (14) drivable in rotation in the first basin (3) below the dip tube (8) in order to set the first water bath (4) in rotation to form a vortex (15), wherein the feeding device (7) comprises a melt container (9) for the slag melt (6), which has an opening (12) arranged concentrically with respect to the dip tube (8) in its bottom (9a), which opening can be closed by means of a plunger (11) displaceable in an axial direction (10) relative to the dip tube (8), wherein a feed line (17) for sulfuric acid and/or nitric acid opens into the first basin (3), preferably in a bottom region below the rotor (14), **characterized in that** a second basin (28) for receiving a second water bath (31) adjoins an edge region of the first basin (3), wherein preferably a feed line (32) for a gaseous oxidizing agent, preferably for an oxygen-containing gas, and/or a feed line (33) for acetic acid opens into the second basin (28).

13. Apparatus according to claim 12, **characterized in that** a feed line (27) for a gaseous oxidizing agent, in particular for an oxygen-containing gas, is guided axially through the plunger (11).

14. Apparatus according to claim 13, **characterized in that** the second basin (28) is penetrated by a guide body (29) to form an annular space (30), wherein preferably a feed line (34) for introducing motive steam opens into the annular space (30).

15. Apparatus according to any one of claims 12 to 14, **characterized in that** the granulation chamber (2) has a discharge region (36) for granulated slag glass, which can be separated from the second basin (28) by means of a barrier element (37), wherein preferably a screen surface (17), a hydrocyclone, or a pusher centrifuge for drawing off vapors into a vapor exhaust is arranged in the discharge region (36).

## Revendications

1. Procédé de production d'un verre de laitier pour la fabrication d'un composant de ciment hydrauliquement actif, dans lequel un laitier fondu réduit (6) contenant du sulfure, en particulier du sulfure de calcium, est soumis à une étape de refroidissement pour vitrifier le laitier fondu, et l'étape de refroidissement consiste à doser le laitier fondu (6) dans un bain d'eau et à l'y disperser, le procédé comprenant au moins les étapes suivantes :
- fourniture d'un premier bain d'eau (4) dans un premier bassin (3),
- introduction initiale d'acide sulfurique dans le premier bain d'eau (4),
- ajout du laitier fondu (6) dans le premier bain d'eau (4) et fourniture d'acide nitrique dans le premier bain d'eau (4) en une quantité suffisante pour convertir en acide sulfurique le sulfure d'hydrogène formé dans le premier bain d'eau (4) lors de la conversion en sulfate, en particulier en sulfate de calcium, de la quantité de sulfure, en particulier de sulfure de calcium, acheminée au premier bain d'eau (4) avec le laitier fondu (6),
- déchargement de verre de laitier solidifié et de sulfate de calcium hors du premier bain d'eau (4),
**caractérisé**
- **en ce que** du nitrite de calcium, formé dans le premier bain d'eau (4) à partir de silicate de calcium acheminé au premier bain d'eau (4) avec le laitier fondu (6) et d'acide nitreux, est introduit dans un deuxième bain d'eau (31) dans un deuxième bassin (28) et est oxydé en nitrate de calcium dans le deuxième bain d'eau (31), de préférence par réglage de l'activité de l'oxygène dans le deuxième bain d'eau (31), et du nitrate de calcium et de la micro-silice colloïdale y adhérant sont récupérés à partir du deuxième bain d'eau (31), ou
- **en ce que** du nitrite de calcium, formé dans le premier bain d'eau (4) à partir de silicate de calcium acheminé au premier bain d'eau (4) avec le laitier fondu (6) und d'acide nitreux, est introduit dans un deuxième bain d'eau (31) dans un deuxième bassin (28) et est réduit dans le deuxième bain d'eau (31), de préférence par ajout d'acide acétique dans le deuxième bain d'eau (31), et de l'hydroxyde de calcium et de la micro-silice sont récupérés à partir du deuxième bain d'eau (31).

2. Procédé selon la revendication 1, **caractérisé en ce que** l'acide sulfurique est introduit initialement dans le premier bain d'eau (4) à une concentration comprise entre 0,05 mol/l et 0,15 mol/l, de préférence à une concentration comprise entre 0,08 mol/l et 0,12 mol/l, et de manière particulièrement préférée à une concentration de 0,1 mol/l.

3. Procédé selon la revendication 1 ou 2, **caractérisé en ce que**, par kilogramme de la quantité de sulfure acheminée au premier bain d'eau (4) avec le laitier fondu (6), entre 4,2 kg et 6,2 kg d'acide nitrique, de préférence entre 4,7 kg et 5,7 kg d'acide nitrique et de manière particulièrement préférée 5,2 kg d'acide nitrique sont fournis.

4. Procédé selon la revendication 1, 2 ou 3, **caractérisé en ce que** l'acide nitrique est fourni au moins en partie par ajout dans le premier bain d'eau.

5. Procédé selon l'une quelconque des revendications 1 à 4, **caractérisé en ce que** l'acide nitrique est fourni au moins en partie par oxydation d'acide nitreux dans le premier bain d'eau (4), de préférence par réglage de l'activité de l'oxygène dans le premier bain d'eau (4).

6. Procédé selon l'une quelconque des revendications 1 à 5, **caractérisé en ce que**, pendant l'ajout du laitier fondu (6), la concentration de sulfure d'hydrogène dans le premier bain d'eau (4) et/ou dans une phase gazeuse ou une phase de vapeur au-dessus du premier bain d'eau (4) est mesurée et, en cas d'augmentation de la ou des concentrations mesurées de sulfure d'hydrogène, de l'acide nitrique et/ou de l'acide sulfurique est ajouté au premier bain d'eau (4).

7. Procédé selon l'une quelconque des revendications 1 à 6, **caractérisé en ce que** de l'acide sulfurique supplémentaire est ajouté au premier bain d'eau (4) en une quantité suffisante pour convertir en sulfate de calcium et en micro-silice le silicate de calcium acheminé au premier bain d'eau (4) avec le laitier fondu (6).

8. Procédé selon l'une quelconque des revendications 1 à 7, **caractérisé en ce que**, par kilogramme de la quantité de silicate de calcium acheminée au premier bain d'eau (4) avec le laitier fondu (65), entre 745 g et 945 g d'acide sulfurique, de préférence entre 795 g et 895 g d'acide sulfurique et de manière particulièrement préférée 845 g d'acide sulfurique sont introduits.

9. Procédé selon l'une quelconque des revendications 1 à 8, **caractérisé en ce que** le premier bain d'eau (4) est mis en rotation pour former un vortex (15).

10. Procédé selon l'une quelconque des revendications 1 à 9, **caractérisé en ce que** le premier bain d'eau (4) est fourni à une température comprise entre 80 °C et le point d'ébullition, de préférence entre 85 °C et le point d'ébullition, de manière encore préférée entre 90 °C et le point d'ébullition et de manière particulièrement préférée entre 95 °C et le point d'ébullition.

11. Procédé selon l'une quelconque des revendications 1 à 10, **caractérisé en ce que** des buées générées lors de l'étape de refroidissement sont collectées à partir du premier bain d'eau (4), condensées et réintroduites dans le premier bain d'eau (4), la condensation étant réalisée de préférence sous la forme d'une compression adiabatique pour récupérer de la chaleur résiduelle utilisable sur le plan exergétique à partir des buées.

12. Dispositif pour la mise en œuvre du procédé selon l'une quelconque des revendications 1 à 11, comprenant une chambre de granulation (2) pourvue d'un premier bassin (3) destiné à recevoir un premier bain d'eau (4), un dispositif d'alimentation (7) pour le laitier fondu réduit (6) sous la forme d'un tube plongeur (8) s'étendant dans le premier bassin (3) ainsi qu'un rotor (14) pouvant être entraîné en rotation dans le premier bassin (3) au-dessous du tube plongeur (8) afin de mettre le premier bain d'eau (4) en rotation pour former un vortex (15), le dispositif d'alimentation (7) comprenant un récipient de matière fondue (9) pour le laitier fondu (6), qui comporte dans son fond (9a) une ouverture (12) disposée de manière concentrique par rapport au tube plongeur (8), qui peut être fermée au moyen d'un poussoir (11) déplaçable dans une direction axiale (10) par rapport au tube plongeur (8), une conduite d'amenée (17) pour de l'acide sulfurique et/ou de l'acide nitrique débouchant dans le premier bassin (3), de préférence dans une zone de fond au-dessous du rotor (14), **caractérisé en ce qu'**un deuxième bassin (28) destiné à recevoir un deuxième bain d'eau (31) se raccorde à une zone périphérique du premier bassin (3), une conduite d'amenée (32) pour un agent oxydant gazeux, de préférence pour un gaz contenant de l'oxygène, et/ou une conduite d'amenée (33) pour de l'acide acétique débouchant de préférence dans le deuxième bassin (28).

13. Dispositif selon la revendication 12, **caractérisé en ce qu'**une conduite d'amenée (27) pour un agent oxydant gazeux, en particulier pour un gaz contenant de l'oxygène, est guidée axialement à travers le poussoir (11).

14. Dispositif selon la revendication 13, **caractérisé en ce que** le deuxième bassin (28) est traversé par un corps de guidage (29) pour former un espace annulaire (30), une conduite d'amenée (34) pour l'introduction de vapeur motrice débouchant de préférence dans l'espace annulaire (30).

15. Dispositif selon l'une quelconque des revendications 12 à 14, **caractérisé en ce que** la chambre de granulation (2) comporte une zone de déchargement (36) pour du verre de laitier granulé, qui peut être séparée du deuxième bassin (28) au moyen d'un élément d'obturation (37), une surface de tamisage (17), un hydrocyclone ou une centrifugeuse à poussoir étant de préférence disposé(e) dans la zone de déchargement (36) pour extraire des buées dans un système d'évacuation de buées.
